(19) Europäisches Patentamt / European Patent Office / Office européen des brevets

(11) **EP 2 311 229 B1**

(12) **EUROPEAN PATENT SPECIFICATION**

(45) Date of publication and mention
of the grant of the patent:
**23.11.2016 Bulletin 2016/47**

(21) Application number: **09805354.9**

(22) Date of filing: **24.07.2009**

(51) Int Cl.:
*H04L 29/02* (2006.01)  *H04L 5/00* (2006.01)
*H04L 7/04* (2006.01)  *H04L 7/10* (2006.01)
*H04L 25/02* (2006.01)  *H04L 27/18* (2006.01)
*H04L 27/26* (2006.01)  *H04J 13/10* (2011.01)
*H04J 13/00* (2011.01)  *H04W 84/18* (2009.01)
*H04L 25/03* (2006.01)  *H04L 27/00* (2006.01)

(86) International application number:
**PCT/US2009/051684**

(87) International publication number:
**WO 2010/017042 (11.02.2010 Gazette 2010/06)**

(54) **METHOD AND APPARATUS OF GENERATING PACKET PREAMBLE**

VERFAHREN UND VORRICHTUNG ZUR ERZEUGUNG EINER PAKETPRÄAMBEL

PROCÉDÉ ET APPAREIL DE GÉNÉRATION DE SYNCHRONISEUR INITIAL DE PAQUET

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **08.08.2008 US 188382 P
02.06.2009 US 476328**

(43) Date of publication of application:
**20.04.2011 Bulletin 2011/16**

(73) Proprietor: **Intel Corporation
Santa Clara, CA 95054 (US)**

(72) Inventors:
• **KASHER, Assaf
34367 Haifa (IL)**
• **SUTSKOVER, Ilan
38376 Hadera (IL)**
• **SOFFER, Menashe
37861 Katzir (IL)**

(74) Representative: **Clarke, Jeffrey David
HGF Limited
140 London Wall
London EC2Y 5DN (GB)**

(56) References cited:
EP-A1- 1 455 461     EP-A2- 1 603 278
US-A1- 2003 012 160    US-A1- 2004 076 239
US-A1- 2005 003 796    US-A1- 2005 163 081
US-A1- 2005 180 357    US-A1- 2007 248 175
US-A1- 2008 025 419

• JUN YANG ET AL: "Adaptive Synchronization for Gbps Single-Carrier 60 GHz Wireless Systems", SARNOFF SYMPOSIUM, 2008 IEEE, IEEE, PISCATAWAY, NJ, USA, 28 April 2008 (2008-04-28), pages 1-5, XP031252543, ISBN: 978-1-4244-1843-5
• "Firstcut-Baseline-Document-D1 ; Firstcut-Baseline-Document-D1", IEEE DRAFT; FIRSTCUT-BASELINE-DOCUMENT-D1, IEEE-SA, PISCATAWAY, NJ USA, vol. 802.15.3c, 10 January 2008 (2008-01-10), pages 1-92, XP017610034, [retrieved on 2008-01-10]
• MING LEI ET AL: "MMSE-FDE Based on Estimated SNR for Single-Carrier Block Transmission (SCBT) in Multi-Gbps WPAN (IEEE 802.15.3c)", COMMUNICATIONS WORKSHOPS, 2008. ICC WORKSHOPS '08. IEEE INTERNATIONAL CONFERENCE ON, IEEE, PISCATAWAY, NJ, USA, 19 May 2008 (2008-05-19), pages 52-56, XP031265203, ISBN: 978-1-4244-2052-0

EP 2 311 229 B1

**Description**

**BACKGROUND OF THE INVENTION**

A personal wireless area network (WPAN) is a network used for communication among computing devices (for example, personal devices such as telephones and personal digital assistants) close to one person (the devices may or may not belong to that person). The reach of a WPAN may be a few meters. WPANs may be used for interpersonal communication among personal devices themselves, or for connecting via an uplink to a higher level network, for example the Internet.

The IEEE 802.15.3 Task Group 3c (TG3c) was formed in March 2005. TG3c is developing a millimeter- wave (mmWave) based alternative physical layer (PHY) for the existing 802.15.3 Wireless Personal Area Network (WPAN) Standard e.g., IEEE 802.15.3-2003. This mmWave WPAN may operate in a band including the 57-64 GHz unlicensed band defined by FCC 47 CFR 15.255 and other regulatory bodies and may be referred to as "60GHz". The millimeter-wave WPAN may allow very high data rate (e.g., over 2 Gigabit per second (Gbps) applications such as high speed Internet access, streaming content download (e.g., video on demand, high-definition television (HDTV), home theater, etc.), real time streaming and wireless data bus for cable replacement.

However, an mm Wave communication link is significantly less robust than links operating at lower frequencies (e.g. 2.4GHz and 5GHz bands) due to the Friis transmission equation, oxygen absorption and high attenuation through obstructions. In addition, the mm Wave communication link may use a directional antenna and/or antennas array to increase the communication range. The use of a directional antenna makes a link very sensitive to mobility. For example, a slight change in the orientation of the device or the movement of a nearby object and/or person may disrupt the link.

60GHz communication standards tend to have both orthogonal frequency-division multiplexing (OFDM) and single carrier (SC) physical layers. In some standards only one of the OFDM or the SC is mandatory, and in some other standards neither of OFDM and SC is mandatory. In systems having both OFDM and SC most of the time different preambles are used for each type of modulations.

JUN YANG ET AL: "Adaptive Synchronization for Gbps Single-Carrier 60 GHz Wireless Systems", SARNOFF SYMPOSIUM, 2008 IEEE, IEEE, PISCATAWAY, NJ, USA, 28 April 2008, pages 1-5, ISBN: 978-1-4244-1843-5 describes an adoptive synchronization method for extremely dispersive multipath fading channels

US2004/076239 describes an apparatus and method for tracking residual frequency offset for single carrier-frequency domain equalizer system.

"Firstcut-Baseline-Document-D1 ; Firstcut-Baseline-Document-D1", IEEE DRAFT, FIRSTCUT-BASELINE-DOCUMENT-D1, IEEE-SA, PISCATAWAY, NJ USA, vol. 802.15.3c, 10 January 2008, pages 1-92 relates to a draft standard for information technology-telecommunications and information exchange between systems.

EP1455461 describes a method for processing ultra wide band signals in a wireless system, and a corresponding device.

US2003/012160 relates to a wireless communication system configured to communicate using a mixed waveform configuration.

MING LEI ET AL: "MMSE-FDE Based on Estimated SNR for Single-Carrier Black Transmission (SCBT) in Multi-Gbps WPAN (IEEE 802.12.3c)", COMMUNICATIONS WORKSHOPS, 2008. ICC WORKSHOPS '08. IEEE INTERNATIONAL CONFERENCE ON, IEEE, PISCATAWAY, NJ, USA, 19 May 2008, pages 52-56, ISBN, 978-1-4244-2052-0 is an investigation of the use of minimum-mean-square-error frequency-domain equalization based on a simple signal-to-noise ratio estimation method for single-carrier block transmission our multipath fading channels.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

FIG. 1 is a schematic illustration of a wireless communication network according to exemplary embodiments of the present invention;
FIG. 2 is a schematic illustration of a packet preamble according to exemplary embodiment of the invention; and
FIG. 3 is a block diagram of a wireless communication device according to some embodiments of the present invention;
FIG. 4 is a schematic illustration of flowchart of a method of transmitting a packet preamble according to some exemplary embodiments of the invention; and
FIG. 5 is a block diagram of a system according to embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION OF EMBODIMENTS OF THE INVENTION

The invention is defined by the appended claims 1-14. The embodiments that do not fall under the scope of the claims have to be interpreted as examples useful for understanding the invention.

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the present invention.

Some portions of the detailed description, which follow, are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, or transmission devices. The terms "a" or "an", as used herein, are defined as one, or more then one. The term plurality, as used herein, is defined as two, or more than two. The term another, as used herein is defined as at least a second or more. The terms including and/or having, as used herein, are defined as, but not limited to, comprising. The term coupled as used herein, is defined as operably connected in any desired form for example, mechanically, electronically, digitally, directly, by software, by hardware and the like.

It should be understood that the present invention may be used in a variety of applications. Although the present invention is not limited in this respect, the circuits and techniques disclosed herein may be used in many apparatuses such as stations of a radio system. Stations intended to be included within the scope of the present invention include, by way of example only, wireless local area network (WLAN) stations, wireless personal network (WPAN), and the like.

Types of WPAN stations intended to be within the scope of the present invention include, although are not limited to, mobile stations, access points, stations for receiving and transmitting spread spectrum signals such as, for example, Frequency Hopping Spread Spectrum (FHSS), Direct Sequence Spread Spectrum (DSSS), Complementary Code Keying (CCK), Orthogonal Frequency-Division Multiplexing (OFDM) and the like.

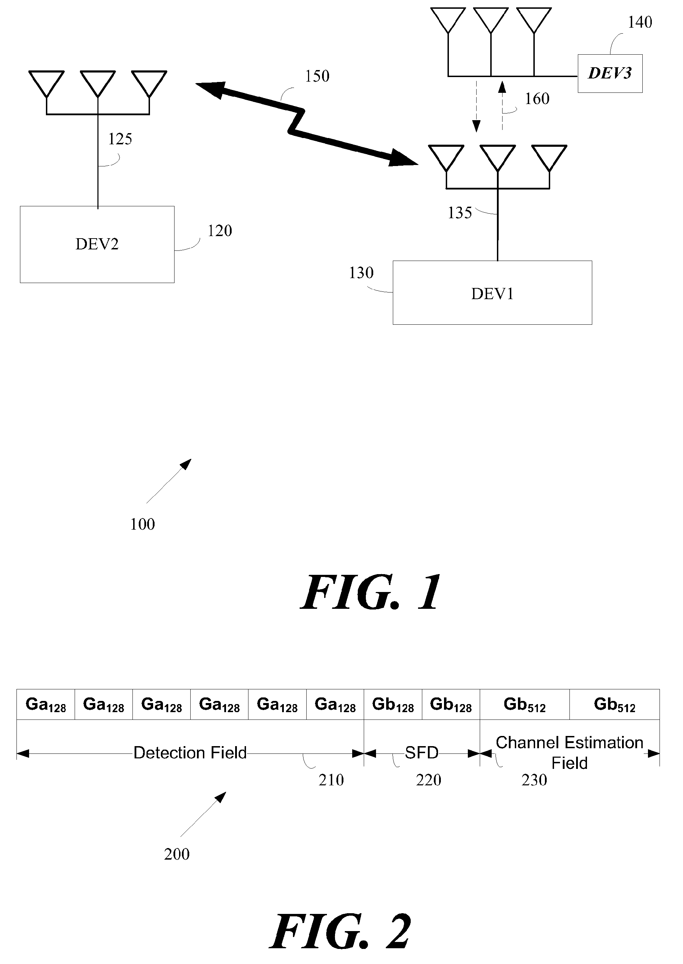

Turning first to FIG. 1, a schematic illustration of a wireless communication network 100, according to exemplary embodiments of the invention is shown. Wireless communication network 100 may include for example, a WPAN/WLAN. For example, wireless communication network 100 may operate according to the standard developed by the IEEE 802 802.11 Task Group ad (TGad). TGad is developing an Enhancements for Very High Throughput in the 60 GHz Band for WLAN

According to this exemplary embodiment of the invention, wireless communication network 100, for example a WPAN, may include stations 120, 130 and 140. Stations 120, 130 140 are depicted as devices (DEVs) e.g., DEV1, DEV2 and DEV3, respectively. Although the scope of the present invention is not limited in this respect, stations 120, 130 and 140 may include a camera, a mouse, an earphone, a speaker, a display, a mobile personal device or the like. Furthermore, each of DEV1, DEV2 and DEV3 may serve at and/or be a part of another WPAN, if desired.

According to this exemplary embodiment of the invention, DEV1 130 and DEV2 120 may transmit and receive OFDM signals and/or single carrier (SC) signals via a direct link 150, if desired. According to some embodiments of the invention a direct link may be a wireless link between two devices without the intervention of another device and/or base station and/or network controller or the like. For example, DEV3 140 may transmit a packet preamble which includes plurality of sequences via a direct link 160 to DEV1 160. DEV1 130 may transmit the preamble packet to DEV2 120 via a direct link 150, if desired.

According to at least one embodiment of the invention, the same preamble packet may be transmitted and detected by both SC devices and multiple carrier devices (e.g., OFDM), although the scope of the present invention is not limited in this respect.

Turning to FIG. 2, a schematic illustration of a packet preamble 200 according to exemplary embodiment of the invention is shown. According to embodiments of the invention packet preamble 200 may be used for both multiple carrier scheme transmissions SC scheme transmissions for example, OFDM and for SC transmissions, if desired.

According to one example embodiment, packet preamble 200 may include a detection field 210, a synchronization field (SFD) 220, and a channel estimation field 230.

According to some exemplary embodiments of the invention, the preamble portion of the packet 200 may be used for, for example, automatic gain control (AGC), signal detection, frequency offset estimation, synchronization and channel estimation. The detection, AGC and frequency offset estimation (FOE) may be done on periodic sequences. According to some exemplary embodiments, packet 200 may be based on $\pi$/2-BPSK sequences that may be used by SC receivers.

For example, detection field 210 may be made up of a repetition of a sequence with good cross correlation properties. According to embodiments of the invention, a sequence with a desired cross correlation property may be defined as a sequence whose cross correlation (either periodic or a-periodic) with its sequence having a large peak and many zeros around the peak. Non-limiting examples for sequences with the desired correlation property are pseudorandom number (PN) sequences, complementary (Golay) sequences, barker codes, a Constant Amplitude Zero Auto-Correlation (CAZAC) sequences and the like. SFD 220 may include the sequence used for the detection and selection of the transmitted modulation. For example, an inversion of the sequence used for detection or modulation of group of these sequences.

In some other embodiments of the invention, SFD 220 may be omitted and its tasks may be performed by channel estimation field 230. Channel estimation field 230 may include sequences including either a long PN sequence or a pair of complementary (Golay) sequences, although the scope of the present invention is not limited in this respect.

According to exemplary embodiments of the invention, preamble packet 200 of signal sequences may be transmitted to both a single carrier wireless device and a multiple carrier wireless device. According to one example, a preamble of a packet may include a first sequence for detecting a signal (e.g., sequences of detection field 210), a second sequence for detecting and selecting a transmitter modulation (e.g., sequences of SFD 220) and a third sequence for estimating a channel (e.g., sequences of channel estimation field 230). The first, second and third sequences may be modulated by 2/$\Pi$ Binary Phase Shift Keying (BPSK) modulation, if desired. It should be understood that other modulation schemes may be used with some other embodiments of the invention.

According to one exemplary embodiment of the invention, preamble packet 200 may be transmitted by an SC transmitter. In this case, the first sequence, the second sequence and the third sequence may be filtered by a pulse shaping filter. In other embodiments of the invention, preamble packet 200 may be transmitted by a multiple carrier transmitter for example, an OFDM transmitter. In this case the first, second and third sequences may be resampled by a filter known to the receiver as for example described in the following equations :

Firstly the first, second and third sequences may be resampled resample according to the following equation:

$$r^{OFDM(2)}_{Preamble}(n) = \begin{cases} r_{preamble} & (\iota) & n=0,3,6...,3\iota \\ 0 & otherwise \end{cases} \qquad \text{equation 1}$$

which may implement adding two zeros after each sample. Secondly the first, second and third sequences may be filtered by a filter known to the receiver for example, decimation filter as depicted by the following equation (other equations may be used):

$$r^{\sim OFDM(2)}_{preamble}(n) = \sum_{k=0}^{K-1} r^{OFDM(2)}_{preamble}((n-k)_s) h_{Filt}(k) \qquad \text{equation 2.}$$

Thirdly, decimation may be performed on the first, second and third sequences by a factor of 2, taking every second sample as depicted in the following equation:

$$r^{OFDM}_{preamble}(n) = \widetilde{r}^{\sim OFDM(2)}_{preamble}(2n), n = 0,1,... \qquad \text{Equation 3}$$

In digital signal processing art the term "decimation" and its derivative may be defined as a technique for reducing the number of samples in a discrete-time signal and/or sequence. Decimation may include low-pass anti-aliasing filtering and downsampling of the signal, although the scope of the present invention is not limited in this respect.

According to this example, it is assumed that the OFDM (nominal) sampling rate is 1 ½, the chip rate of the SC for providing guard bands around the OFDM data subcarriers. The above is also applicable for other ratios between the OFDM sample rate and SC chip rate. In the receiver, detection can be done by a combination of autocorrelation and cross correlation. Efficient algorithms for correlation exist for m-sequences (PN-sequences) and complementary (Golay) sequences, if desired.

Although the scope of the present invention is not limited in this respect, receiving said preamble packet may be done either in a single carrier receiving scheme or in a multiple carrier receiving scheme, if desired. A receiver able to operate in both SC and OFDM may receive the preamble packet and decode the first, second and third sequences.

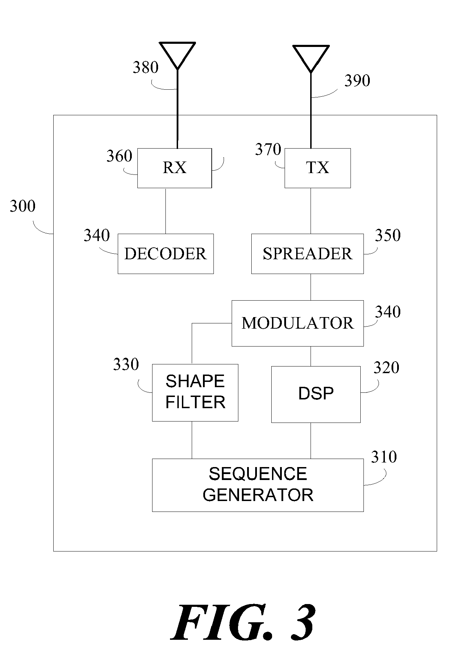

Turning to FIG. 3 a block diagram of a wireless communication device according to some embodiments of the present invention is shown. According to this exemplary embodiment, wireless communication device 300 may include a sequence generator 310, a digital signal processor (DSP) 320, a shape filter 330, a modulator 340, a receiver (RX) 360, a transmitter (TX) 370 and a plurality of antennas 380, 390.

According to exemplary embodiment of the invention, RX 360 and TX 370 may be a part of Multiple-Input-Multiple-Output (MIMO) transmitters-receivers system (not shown). According to this example RX 360 and/or TX 370 may include two or more receivers and two or more transmitters, respectively and antennas 380 and 390 may include plurality of antennas and may be operably coupled to the MIMO transmitters-receivers systems, although the scope of the present invention is not limited in this respect. According to some exemplary embodiments of the invention antennas 380 and/or 390 may include one or more antennas. For example, antennas 380 and/or 390 may include directional antennas, an antenna array, a dipole antenna or the like.

According to some embodiments of the invention, wireless communication device 300 may operate in a millimeter-wave WPAN as both, SC device and/or OFDM device, if desired. For example, wireless communication device may operate as follows. Sequence generator 310 may generate signal sequences for a preamble packet, for example preamble packet 200. Sequence generator 310 may generate the first sequence from repetition of a cross correlated sequence for example, pseudorandom number (PN) sequences, Golay sequences, barker codes and the like. Sequence generator 310 may generate the second sequence by an inversion of the first sequence and may generate the third sequence from a pair of complementary Golay sequences, if desired. Modulator 340 may modulate the first, second and third sequences by 2/Π Binary Phase Shift Keying (BPSK) modulation, if desired

TX 370 may transmit the same preamble packet of signal sequences to both a single carrier wireless device and/or a multiple carrier wireless device. The preamble packet e.g., preamble packet 200, may include detection field, SFD field and a channel estimation field. The detection field may include the first sequence which may be used by RX 360 for detecting a signal or for a frequency offset estimation. The SFD field may include the second sequence that may be used by RX 360 for detecting and selecting a transmitter modulation, if desired. The channel estimation field may include the third sequence which may be used by RX 360 for estimating the channel, although the scope of the present invention is not limited to this example.

According to one exemplary embodiment of the invention, a preamble packet which is intended to be transmitted to an SC device may be filtered by shape filter 330. For example, shape filter 330 may filter an at least one of the first sequence, the second sequence and the third sequence. Modulator 340 may modulate the preamble packet which filtered by shape filter 320 able to modulate the preamble packet according to a single carrier modulation scheme.

According to one other exemplary embodiment of the invention, a preamble packet is which intended to be transmitted to OFDM device may be processed by DSP 320. For example, DSP 320 may use a three step process, if desired. The first step may be processing the first, second and third sequences of the preamble packet by adding two zeros between two samples and interpolating the first, second and third sequences by three. The second step may be filtering the first, second and third sequences by a decimation filter and the third step may be sampling the first, second and third sequences every one second and decimating the samples by two. Modulator 340 may modulate the preamble packet which is processed by DSP 320 according to a multiple carriers modulation scheme although the scope of this present invention is not limited in this respect.

Furthermore, the preamble packet may be spreaded by spreader 350 and may be transmitted by TX 370 and antenna 390, if desired. In the receiving device, antenna 380 and RX 360 may receive the sequences of the preamble packet either by a single carrier receiving scheme or by a multiple carriers receiving scheme. Decoder 340 may decode the first, second and third sequences, if desired. After decoding the sequences, synchronization may be done by correlation. Channel estimation may be done either by correlation in the time domain or in the frequency domain by dividing the transmitted sequence frequency response. It should be understood that the same preamble packet is used for both SC and OFDM and the preamble may be defined by resampling the $\pi/2$ BPSK sequences using a filter known to the receiver.

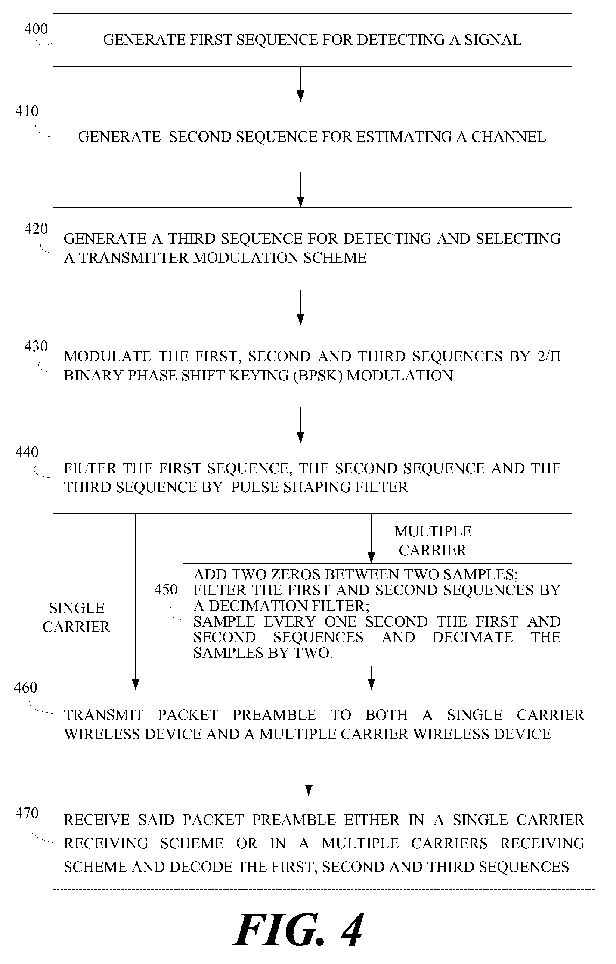

Turning to FIG. 4 a schematic illustration of flowchart of a method of transmitting a packet preamble according to some exemplary embodiments of the invention is shown. Although the scope of the present invention is not limited to this respect the method may start by generating fields of preamble sequences that suitable to be received by both a signal carrier receiver and a multiple carrier receiver e.g., an OFDM receiver and/or by a device having both a SC receiver and an OFDM receiver.

According to this example, the method may start by generating a first sequence for detecting a signal (text block 400), generating a second sequence for estimating a channel (text box 410) and generating a third sequence for detecting and selecting a transmitter modulation scheme (text block 420).

According to this exemplary embodiment, the first sequence may be generated by repetition of a sequence having a desired cross correlation properties for example, pseudo random sequences, Baker codes and the like. The third sequence may inversion of the first sequence, although the scope of the present invention is not limited to this example.

The method may continue with modulating the first, second and third sequences by for example $\pi/2$ Binary Phase Shift Keying (BPSK) modulation (text block 440) and filtering an at least one of the first sequence, the second sequence and the third sequence by a pulse shaping filter (text block 440).

In the case that the packet preamble is intendment to be received by a multiple carrier receiver, the packet preamble may be further processed by adding for example two zeros between two samples, filtering the first and second sequences by a decimation filter and sampling the first and second sequences every second and decimating the samples by two, if desired (text block 450). The packet preamble of signal sequences may be transmit to both a single carrier wireless device and a multiple carrier wireless device (text block 460). The packet preamble may be received by either in a single carrier receiving scheme or in a multiple carriers receiving scheme (text block 470). The first, second and third sequences may be decoded at the receiver, although the scope of the present invention is not limited to this example.

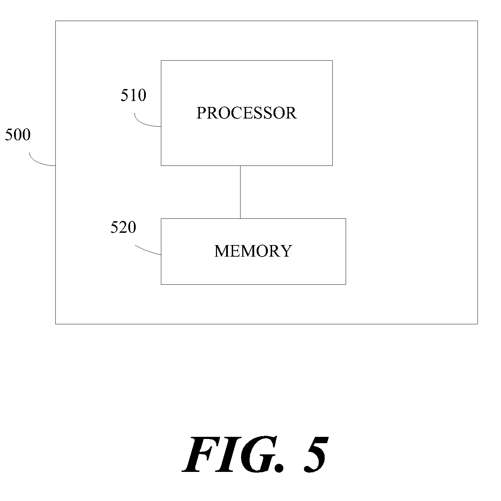

Turning to Fig 5 a block diagram of a system article according to embodiments of the invention is shown. Although the embodiments of the present invention are not limited to this respect, system 500 may include a computer 510 and storage medium such as a memory 520. According to exemplary embodiments of the invention system 500 may include a wireless communication device, a transmitter, a receiver and/or the like. Computer 510 may include a DSP, a processor, a controller or the like that operably coupled to memory 520. Memory 520 may be a processor readable medium, and/or a computer or processor storage medium, such as for example a memory, a disk drive, or a USB flash memory, encoding, including or storing instructions.

According to embodiments of the invention computer 510 may execute instructions store in memory 520. The instructions when executed may carry out methods disclosed herein.

## Claims

1. A method of transmitting comprising:

   generating a packet preamble of signal sequences to both a single carrier wireless device and a multiple carrier wireless device, wherein the packet preamble includes at least a first sequence used for detecting a signal and a second sequence for estimating a channel; and transmitting said packet preamble to either a single carrier wireless device or to a multiple carrier wireless device; and **characterized by**:
   transmitting the packet preamble comprises:

   adding two zeros between two samples;
   filtering the first and second sequences by a decimation filter; and sampling the first and second sequences and decimating the first and second sequences by a factor of two, by taking every second sample.

2. The method of claim 1 comprising:

   generating the first sequence from repetition of a cross correlated sequence.

3. The method of claim 2, wherein generating the first sequence comprises:

   generating the first sequence with pseudo random sequences.

4. The method of claim 2, wherein generating the first sequence comprises:

   generating the first sequence with a complementary Golay sequence.

5. The method of claim 1 comprising:

   generating a third sequence for detecting and selecting a transmitter modulation scheme, the third sequence including an inversion of the first sequence;
modulating the first, second and third sequences by π/2 Binary Phase Shift Keying BPSK modulation;
filtering at least one of the first sequence, the second sequence and the third sequence by a pulse shaping filter; and
transmitting the third sequence after the first sequence and before the second sequence.

6. The method of claim 1 comprising:

receiving said packet preamble either in a single carrier receiving scheme or in a multiple carriers receiving scheme; and
decoding the first and second sequences.

7. A wireless communication device comprising:

a transmitter to transmit a packet preamble of signal sequences to either a single carrier wireless device or a multiple carrier wireless device, wherein the packet preamble includes a first sequence used for detecting a signal and a second sequence used for estimating an orthogonal frequency-division multiplexing channel and a single carrier channel; and **characterized by**:

a digital signal processor further to:

process the first and second sequences of the packet preamble by adding two zeros between two samples, to filter the first and second sequences, and to sample the first and second sequences every second sample to decimate the samples by two.

8. A wireless communication device of claim 7 comprising:

a sequence generator to generate the first sequence from repetition of a cross correlated sequence, to generate the second sequence from a pair of complementary sequences. and to generate a third sequence by an inversion of the first sequence;.
a digital signal processor further to:

process the third sequence of the packet preamble by adding two zeros between two samples, to filter the third sequence by a decimation filter, to sample the third sequence every second sample and to decimate the samples by two;
a modulator to modulate the first, second and third sequences by π/2 Binary Phase Shift Keying BPSK modulation; and
a shape filter to filter an at least one of the first sequence, the second sequence and the third sequence, wherein the transmitter transmits the third sequence for detecting and selecting a transmitter modulation after transmitting the first sequence and before transmitting the second sequence.

9. The wireless communication device of claim 7, wherein the first sequence includes a pseudo random sequence.

10. The wireless communication device of claim 7, wherein the first sequence includes a complementary Golay sequence.

11. The wireless communication device of claim 7, wherein the modulator is able to modulate the packet preamble according to a multiple carriers modulation scheme.

12. The wireless communication device of claim 8, wherein the modulator is able to modulate the preamble packet according to a single carrier modulation scheme.

13. The wireless communication device of claim 8 comprising:

a receiver to receive said packet preamble either in a single carrier or in a multiple carriers; and
a decoder to decode the first, second and third sequences.

7

**EP 2 311 229 B1**

**Patentansprüche**

1. Verfahren der Übertragung, umfassend:

   Erzeugen einer Paketpräambel von Signalfolgen für sowohl ein Einzelträger-Drahtlosgerät als auch ein Mehrträger-Drahtlosgerät, wobei die Paketpräambel mindestens eine erste Sequenz für das Detektieren eines Signals und eine zweite Sequenz zum Schätzen eines Kanals umfasst; und Übertragen der Paketpräambel an entweder ein Einzelträger-Drahtlosgerät oder an ein Mehrträger-Drahtlosgerät; und **dadurch gekennzeichnet, dass**:

      das Übertragen der Paketpräambel umfasst:

         Hinzufügen von zwei Nullen zwischen zwei Abtastwerte;
         Filtern der ersten und zweiten Sequenz mittels eines Dezimationsfilters; und Abtasten der ersten und zweiten Sequenz und Dezimieren der ersten und zweiten Sequenz um einen Faktor von 2 durch Nehmen jedes zweiten Abtastwerts.

2. Verfahren nach Anspruch 1, umfassend:

   Erzeugen der ersten Sequenz aus der Wiederholung einer kreuzkorrelierten Sequenz.

3. Verfahren nach Anspruch 2, wobei das Erzeugen der ersten Sequenz umfasst: Erzeugen der ersten Sequenz mit Pseudo-Zufallsfolgen.

4. Verfahren nach Anspruch 2, wobei das Erzeugen der ersten Sequenz umfasst: Erzeugen der ersten Sequenz mit einer komplementären Golay-Sequenz.

5. Verfahren nach Anspruch 1, umfassend:

   Erzeugen einer dritten Sequenz zum Detektieren und Auswählen eines Sender-Modulationsschemas, wobei die dritte Sequenz eine Umkehr der ersten Sequenz einschließt;
   Modulieren der ersten, zweiten und dritten Sequenz mittels Modulation durch binäre n/2 Phasenumtastung (Binary Phase Shift Keying, BPSK);
   Filtern von mindestens einer der ersten Sequenz, zweiten Sequenz oder dritten Sequenz durch einen Pulsformungsfilter; und
   Übertragen der dritten Sequenz nach der ersten Sequenz und vor der zweiten Sequenz.

6. Verfahren nach Anspruch 1, umfassend:

   Empfangen der Paketpräambel entweder in einem Einzelträger-Empfangsschema oder in einem Mehrträger-Empfangsschema; und
   Dekodieren der ersten und zweiten Sequenz.

7. Drahtloses Kommunikationsgerät, umfassend:

   einen Sender zum Übertragen einer Paketpräambel von Signalfolgen an entweder ein Einzelträger-Drahtlosgerät oder ein Mehrträger-Drahtlosgerät, wobei die Paketpräambel eine erste Sequenz umfasst, die zum Detektieren eines Signals verwendet wird, und eine zweite Sequenz, die zum Schätzen eines orthogonalen Frequenzmultiplex-Kanals und eines Einzelträgerkanals verwendet wird; und **dadurch gekennzeichnet, dass**:

      ein Digitalsignalprozessor ferner dazu dient, um:

         die erste und zweite Sequenz der Paketpräambel durch Hinzufügen von zwei Nullen zwischen zwei Abtastwerte zu verarbeiten, die erste und zweite Sequenz zu filtern und die erste und zweite Sequenz nach jedem zweiten Abtastwert abzutasten, um die Abtastwerte um zwei zu dezimieren.

8. Drahtloses Kommunikationsgerät nach Anspruch 7, umfassend:

einen Sequenzgenerator zum Erzeugen der ersten Sequenz aus der Wiederholung einer kreuzkorrelierten Sequenz, zum Erzeugen der zweiten Sequenz aus einem Paar komplementärer Sequenzen und zum Erzeugen einer dritten Sequenz durch Umkehr der ersten Sequenz;
einen Digitalsignalprozessor, der ferner dazu dient:

die dritte Sequenz der Paketpräambel durch Hinzufügen von zwei Nullen zwischen zwei Abtastwerten zu verarbeiten, die dritte Sequenz durch einen Dezimationsfilter zu filtern, die dritte Sequenz nach jedem zweiten Abtastwert abzutasten und die Abtastwerte um zwei zu dezimieren;
einen Modulator zum Modulieren der ersten, zweiten und dritten Sequenz mittels Modulation durch binäre n/2 Phasenumtastung (Binary Phase Shift Keying, BPSK); und
einen Formfilter zum Filtern an mindestens einer der ersten Sequenz, der zweiten Sequenz und der dritten Sequenz,

wobei der Sender die dritte Sequenz zum Detektieren und Auswählen einer Sendermodulation nach dem Übertragen der ersten Sequenz und vor dem Übertragen der zweiten Sequenz überträgt.

9. Drahtloses Kommunikationsgerät nach Anspruch 7, wobei die erste Sequenz eine Pseudo-Zufallsfolge umfasst.

10. Drahtloses Kommunikationsgerät nach Anspruch 7, wobei die erste Sequenz eine komplementäre Golay-Sequenz umfasst.

11. Drahtloses Kommunikationsgerät nach Anspruch 7, wobei der Modulator die Fähigkeit zur Modulation der Paketpräambel gemäß einem Mehrträger-Modulationsschema besitzt.

12. Drahtloses Kommunikationsgerät nach Anspruch 8, wobei der Modulator die Fähigkeit zur Modulation der Paketpräambel gemäß einem Einzelträger-Modulationsschema besitzt.

13. Drahtloses Kommunikationsgerät nach Anspruch 8, umfassend:

einen Empfänger zum Empfangen der Paketpräambel entweder in einem Einzelträger oder Mehrträger; und
einen Decoder zum Dekodieren der ersten, zweiten und dritten Sequenz.

**Revendications**

1. Procédé de transmission, consistant à :

générer un préambule de paquet de séquences de signaux à la fois à un dispositif sans fil à porteuse unique et à un dispositif sans fil à porteuses multiples, dans lequel le préambule de paquet comprend au moins une première séquence utilisée pour détecter un signal et une deuxième séquence utilisée pour estimer un canal ; et transmettre ledit préambule de paquet soit à un dispositif sans fil à porteuse unique, soit à un dispositif dans fil à porteuses multiples ; et **caractérisé par le fait que** :

la transmission du préambule de paquet comprend :

l'ajout de deux zéros entre deux échantillons ;
le filtrage des première et deuxième séquences par un filtre de décimation ; et l'échantillonnage des première et deuxième séquences et la décimation des première et deuxième séquences par un facteur de deux, en prenant tous les deux échantillons.

2. Procédé selon la revendication 1, consistant à :

générer la première séquence à partir de la répétition d'une séquence ayant fait l'objet d'une corrélation croisée.

3. Procédé selon la revendication 2, dans lequel la génération de la première séquence consiste à :

générer la première séquence avec des séquences pseudo-aléatoires.

**4.** Procédé selon la revendication 2, dans lequel la génération de la première séquence consiste à :

générer la première séquence avec une séquence complémentaire de Golan.

**5.** Procédé selon la revendication 1, consistant à :

générer une troisième séquence pour détecter et sélectionner un schéma de modulation d'émetteur, la troisième séquence comprenant une inversion de la première séquence ;
moduler les première, deuxième et troisième séquences au moyen d'une modulation par déplacement de phase bivalente (BPSK) de π/2 ;
filtrer la première séquence et/ou la deuxième séquence et/ou la troisième séquence au moyen d'un filtre conformateur d'impulsions ; et
transmettre la troisième séquence après la première séquence et avant la deuxième séquence.

**6.** Procédé selon la revendication 1, consistant à :

recevoir ledit préambule de paquet soit dans un schéma de réception à porteuse unique, soit dans un schéma de réception à porteuses multiples ; et
décoder les première et deuxième séquences.

**7.** Dispositif de communication sans fil comprenant :

un émetteur pour transmettre un préambule de paquet de séquences de signaux soit à un dispositif sans fil à porteuse unique, soit à un dispositif sans fil à porteuses multiples, dans lequel le préambule de paquet comprend une première séquence utilisée pour détecter un signal et une deuxième séquence utilisée pour estimer un canal de multiplexage par répartition en fréquence orthogonale et un canal à porteuse unique ; et **caractérisé par** :

un processeur de signaux numériques configuré en outre pour :

traiter les première et deuxième séquences du préambule de paquet par ajout de deux zéros entre deux échantillons, pour filtrer les première et deuxième séquences et échantillonner les première et deuxième séquences tous les deux échantillons pour décimer les échantillons par deux.

**8.** Dispositif de communication sans fil selon la revendication 7, comprenant :

un générateur de séquence pour générer la première séquence à partir d'une répétition d'une séquence ayant fait l'objet d'une corrélation croisée, pour générer la deuxième séquence à partir d'une paire de séquences complémentaires et pour générer une troisième séquence par une inversion de la première séquence ;
un processeur de signaux numériques configuré en outre pour :

traiter la troisième séquence du préambule de paquet par ajout de deux zéros entre deux échantillons, pour filtrer la troisième séquence au moyen d'un filtre de décimation, échantillonner la troisième séquence tous les deux échantillons et décimer les échantillons par deux ;

un modulateur pour moduler les première, deuxième et troisième séquences au moyen d'une modulation par déplacement de phase bivalente (BPSK) de π/2 ; et
un filtre conformateur pour filtrer la première séquence et/ou la deuxième séquence et/ou la troisième séquence,

dans lequel l'émetteur transmet la troisième séquence pour détecter et sélectionner une modulation d'émetteur après la transmission de la première séquence et avant la transmission de la deuxième séquence.

**9.** Dispositif de communication sans fil selon la revendication 7, dans lequel la première séquence comprend une séquence pseudo-aléatoire.

**10.** Dispositif de communication sans fil selon la revendication 7, dans lequel la première séquence comprend une séquence complémentaire de Golan.

**11.** Dispositif de communication sans fil selon la revendication 7, dans lequel le modulateur peut moduler le préambule de paquet selon un schéma de modulation à porteuses multiples.

**12.** Dispositif de communication sans fil selon la revendication 8, dans lequel le modulateur peut moduler le paquet de préambule selon un schéma de modulation à porteuse unique.

**13.** Dispositif de communication sans fil selon la revendication 8, comprenant :

un récepteur pour recevoir ledit préambule de paquet soit sur une porteuse unique, soit sur de multiples porteuses ; et
un décodeur pour décoder les première, deuxième et troisième séquences.

**FIG. 1**

| Ga$_{128}$ | Ga$_{128}$ | Ga$_{128}$ | Ga$_{128}$ | Ga$_{128}$ | Ga$_{128}$ | Gb$_{128}$ | Gb$_{128}$ | Gb$_{512}$ | Gb$_{512}$ |
|---|---|---|---|---|---|---|---|---|---|

Detection Field ← 210 → SFD ← 220 → Channel Estimation Field ← 230 →

200

**FIG. 2**

FIG. 3

```
400  GENERATE FIRST SEQUENCE FOR DETECTING A SIGNAL

410  GENERATE  SECOND SEQUENCE FOR ESTIMATING A CHANNEL

420  GENERATE A THIRD SEQUENCE FOR DETECTING AND SELECTING
     A TRANSMITTER MODULATION SCHEME

430  MODULATE  THE  FIRST,  SECOND  AND  THIRD  SEQUENCES  BY  2/Π
     BINARY PHASE SHIFT KEYING (BPSK) MODULATION

440  FILTER THE FIRST SEQUENCE, THE SECOND SEQUENCE AND THE
     THIRD SEQUENCE BY  PULSE SHAPING FILTER
```

MULTIPLE
CARRIER

```
        450  ADD TWO ZEROS BETWEEN TWO SAMPLES;
SINGLE       FILTER THE FIRST AND SECOND SEQUENCES BY
CARRIER      A DECIMATION FILTER;
             SAMPLE  EVERY  ONE  SECOND  THE  FIRST  AND
             SECOND    SEQUENCES    AND    DECIMATE    THE
             SAMPLES BY TWO.
```

```
460  TRANSMIT  PACKET  PREAMBLE  TO  BOTH  A  SINGLE  CARRIER
     WIRELESS DEVICE AND A MULTIPLE CARRIER WIRELESS DEVICE
```

```
470  RECEIVE  SAID  PACKET  PREAMBLE  EITHER  IN  A  SINGLE  CARRIER
     RECEIVING  SCHEME  OR  IN  A  MULTIPLE  CARRIERS  RECEIVING
     SCHEME AND DECODE THE FIRST, SECOND AND THIRD SEQUENCES
```

*FIG. 4*

510

PROCESSOR

500

520

MEMORY

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004076239 A
- EP 1455461 A
- US 2003012160 A

### Non-patent literature cited in the description

- Adaptive Synchronization for Gbps Single-Carrier 60 GHz Wireless Systems. **JUN YANG et al.** SARNOFF SYMPOSIUM. IEEE, 28 April 2008, 1-5
- Firstcut-Baseline-Document-D1 ; Firstcut-Baseline-Document-D1. IEEE DRAFT, FIRSTCUT-BASELINE-DOCUMENT-D1. IEEE-SA, 10 January 2008, 1-92
- MMSE-FDE Based on Estimated SNR for Single-Carrier Black Transmission (SCBT) in Multi-Gbps WPAN (IEEE 802.12.3c). **MING LEI et al.** COMMUNICATIONS WORKSHOPS, 2008. ICC WORKSHOPS '08. IEEE, 19 May 2008, 52-56